# EUROPÄISCHE PATENTANMELDUNG

(11) **EP 3 671 576 A1**
(43) Veröffentlichungstag der Anmeldung: **24.06.2020**
(21) Anmeldenummer: 18214350.3
(22) Anmeldetag: 20.12.2018
(51) Int. Cl.: G06N 7/00, G06N 20/00, F15B 20/00

(54) **VERFAHREN UND VORRICHTUNG ZUM BESTIMMEN VON SEGMENTEN IN EMPFANGENEN ZEITREIHENDATEN EINER SYSTEMKOMPONENTE**

(71) Anmelder: Siemens Aktiengesellschaft, 80333 München (DE)
(72) Erfinder: Geipel, Markus Michael, 80799 München (DE); Merk, Stephan, 80804 München (DE); Mittelstädt, Sebastian, 81541 München-Haidhausen (DE)

(57) **Zusammenfassung**

Die Erfindung betrifft ein Verfahren zum Bestimmen von Segmenten in empfangenen Zeitreihendaten einer Systemkomponente mit dem Schritt Empfangen von Zeitreihendaten von wenigstens einer Systemkomponente über eine bestimmte Zeitdauer. In einem weiteren Schritt werden die von einer Systemkomponente empfangenen Zeitreihendaten in separate Zeitreihenabschnitte zerlegt. In den Zeitreihendaten der separaten Zeitreihenabschnitte werden Merkmale basierend auf Merkmalsdefinitionen ermittelt. Die Zeitreihenabschnitte mit gleichen Merkmalen werden zu jeweils einem Cluster zugeordnet. Der Cluster wird auf Basis eines vorgegebenen probalisitschen Beschreibungsmodells gebildet. Auf die Merkmale in den Zeitreihenabschnitten wird ein Hidden-Markow-Model angewendet. Hierbei entspricht ein Zustand des Hidden-Markow-Models den gebildeten Clustern. In einem weiteren Schritt werden diejenigen Zeitreihenabschnitte selektiert, die über die Zeitdauer der Zeitreihendaten den gleichen Zustand des Hidden-Markow-Models aufweisen. In einem weiteren Schritt werden diejenigen selektierten Zeitreihenabschnitte zu jeweils einem Segment zugeordnet, die zeitlich aufeinanderfolgend zusammenliegen.

Es entfällt auf vorteilhafte Weise eine aufwändige, zeit- und kostenintensive manuelle Auswahl der Bereiche durch einen Experten in den Zeitreihendaten, die notwendige Trainingsdaten für ein Maschinenlernen umfassen. Zudem weisen die für die Trainingsdaten vergebenen Labels eine verbesserte Konsistenz und Qualität auf.

## Beschreibung

Die vorliegende Erfindung betrifft ein Verfahren zum Bestimmen von Segmenten in empfangenen Zeitreihendaten einer Systemkomponente. Ferner betrifft die Erfindung eine Vorrichtung zum Bestimmen von Segmenten in empfangenen Zeitreihendaten einer Systemkomponente.

### Stand der Technik

Die Verfügbarkeit von gekennzeichneten Daten, beispielsweise mit einem Label gekennzeichnet, ist eine der wichtigsten Voraussetzungen für einen erfolgreichen Maschinenlernen-Prozess. Um ein Maschinenlernen durchführen zu können, werden Trainingsdaten benötigt. Im industriellen Umfeld werden die Trainingsdaten, beispielsweise einer Maschine, durch einen Experten für die Maschine mit einem Label versehen und zur Verfügung gestellt. Aus den mit Labels gekennzeichneten Trainingsdaten ist zu entnehmen, wann beispielsweise eine Maschine gut funktioniert, wann die Maschine schlecht funktioniert und wann ein bestimmter Vorfall (Anomalie) eingetreten ist. Die mit einem Label gekennzeichneten Daten können für ein Maschinenlernen verwendet werden, um beispielsweise automatisch aufzuzeigen, wann die Maschine gut oder schlecht läuft, bzw. ein bestimmter Vorfall eingetreten ist.

Der Prozess des Sichtens und Kennzeichnens der Daten mit Labels ist auf der einen Seite Zeit- und Kostenintensiv, da dieser Prozess manuell durchgeführt wird. Auf der anderen Seite gestaltet sich der Prozess durch das manuelle Ausführen als sehr fehleranfällig. Eine hohe Fehleranfälligkeit ergibt sich zum einen dadurch, dass der Experte in seinem Vorgehen zum Sichten und Kennzeichnen der Daten nicht immer konsistent vorgeht. Zudem fehlt es den gekennzeichneten Daten an der Genauigkeit, um ein fehlerfreies Maschinenlernen zu ermöglichen. Beispielsweise muss ein Label in den Zeitreihendaten genau die entsprechende Information, beispielsweise eine Anomalie, die für das Maschinenlernen interessant ist abdecken und darf keine zusätzlichen Informationen enthalten, welche nicht mehr zu der Anomalie zu zuordnen sind. Dies würde zu einem fehlerhaften Anlernen und zu Fehlern im anschließenden produktiven Prozess führen. Experten ihrer Bereiche neigen bei dem Kennzeichnen der Daten allerdings dazu, mit dem Wissen weiterer Experten entsprechende Daten zu kennzeichnen. Somit werden die Daten nicht mit der notwendigen Sorgfalt gekennzeichnet und können zu viele Informationen oder zu wenige Informationen in den durch ein Label gekennzeichneten Bereichen umfassen. Für das Maschinenlernen sind diese Trainingsdaten in den meisten Fällen dann unzureichend und nicht verwertbar.

Die Problematik der fehlenden Genauigkeit wird in bekannten Verfahren durch ein verbessertes Training der Experten versucht zu begegnen. Die Problematik von inkonsistenten Labels wird in bekannten Verfahren durch ein Mehrfaches kennzeichnen der Daten mit Labels versucht zu begegnen, so dass nur konstante Labels für das Maschinenlernen verwendet werden. Dies erhöht zusätzlich den Zeit- und Kostenaufwand.

Vor diesem Hintergrund ist es eine Aufgabe der vorliegenden Erfindung, den manuellen Aufwand für das Kennzeichnen der Daten mit einem Label zu reduzieren und die Genauigkeit und Konsistenz der mit Labels zu kennzeichnenden Daten zu verbessern.

Diese Aufgabe wird gemäß einem ersten Aspekt der vorliegenden Erfindung durch ein Verfahren mit den in Patentanspruch 1 angegebenen Merkmalen gelöst.

Die Erfindung betrifft ein Verfahren zum Bestimmen von Segmenten in empfangenen Zeitreihendaten einer Systemkomponente mit dem Schritt Empfangen von Zeitreihendaten von wenigstens einer Systemkomponente über eine bestimmte Zeitdauer. In einem weiteren Schritt werden die von einer Systemkomponente empfangenen Zeitreihendaten in separate Zeitreihenabschnitte zerlegt. In den Zeitreihendaten der separaten Zeitreihenabschnitte werden Merkmale basierend auf Merkmalsdefinitionen ermittelt. Die Zeitreihenabschnitte mit gleichen Merkmalen werden zu jeweils einem Cluster zugeordnet. Der Cluster wird auf Basis eines vorgegebenen probalisitschen Beschreibungsmodells gebildet. Auf die Merkmale in den Zeitreihenabschnitten wird ein Hidden-Markow-Model angewendet. Hierbei entspricht ein Zustand des Hidden-Markow-Models den gebildeten Clustern. In einem weiteren Schritt werden diejenigen Zeitreihenabschnitte selektiert, die über die Zeitdauer der Zeitreihendaten den gleichen Zustand des Hidden-Markow-Models aufweisen. In einem weiteren Schritt werden diejenigen selektierten Zeitreihenabschnitte zu jeweils einem Segment zugeordnet, die zeitlich aufeinanderfolgend zusammenliegen.

Die Erfindung schafft ferner gemäß einem weiteren Aspekt eine Vorrichtung mit den in Patentanspruch 8 angegebenen Merkmalen.

Die Vorrichtung zum Bestimmen von Segmenten in empfangenen Zeitreihendaten einer Systemkomponente umfasst eine Empfangseinheit zum Empfangen von Zeitreihendaten von wenigstens einer Systemkomponente über eine bestimmte Zeitdauer. Ferner umfasst die Vorrichtung eine Zerlegeeinheit zum Zerlegen der empfangenen Zeitreihendaten in separate Zeitreihenabschnitte. Zudem umfasst die Vorrichtung eine Ermittlungseinheit zum Ermitteln von Merkmalen in den Zeitreihendaten der separaten Zeitreihenabschnitte basierend auf Merkmalsdefinitionen. Weiterhin umfasst die Vorrichtung eine Zuordnungseinheit zum Zuordnen der Zeitreihenabschnitte mit gleichen Merkmalen zu jeweils einem Cluster, der auf Basis eines vorgegebenen probabilistischen Beschreibungsmodells gebildet wird. Ferner ist eine Anwendungseinheit zum Anwenden eines Hidden-Markow-Models auf die Merkmale in den Zeitreihenabschnitten vorgesehen. Ein Zustand des Hidden-Markow-Models entspricht den gebildeten Clustern. Ferner weist die Vorrichtung eine Selektionseinheit zum Selektieren derjenigen Zeitreihenabschnitte auf, die über die Zeitdauer der Zeitreihendaten den gleichen Zustand des Hidden-Markow-Models aufweisen. Zudem ist eine Zuordnungseinheit zum Zuordnen derjenigen selektierten Zeitreihenabschnitte zu jeweils einem Segment, die zeitlich aufeinanderfolgend zusammenliegen.

Die jeweilige Einheit kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein. Ferner kann bei der softwaretechnischen Implementierung das Computerprogrammprodukt auf verschiedenen und verteilt arbeiten Rechnern, beispielsweise einem Rechnerverbund in einer Cloud, verteilt ausgeführt werden.

Die Erfindung schafft ferner gemäß einem weiteren Aspekt ein Computerprogrammprodukt mit den in Patentanspruch 9 angegebenen Merkmalen.

Die Erfindung schafft ferner gemäß einem weiteren Aspekt eine Bereitstellungsvorrichtung für das Computerprogrammprodukt mit den in Patentanspruch 10 angegebenen Merkmalen.

Unter Zeitreihendaten sind aufgezeichnete, beispielsweise auf einem Datenträger gespeicherte Informationen/Daten zu verstehen, die aus einer Beobachtung eines Systems und/oder einer Systemkomponente eines Systems durch eine mit dem System und/oder der Systemkomponente in Kommunikation stehende Sensorik, über mehrere aufeinander folgenden Zeitpunkte resultieren.

Unter einem Segment ist ein Ausschnitt oder ein Teil der Zeitreihendaten zu verstehen, der eine gleichbleibende Dynamik der Zeitreihendaten aufweist. Segmente sind zu einander gleich, wenn diese die gleiche Dynamik in den Zeitreihendaten aufweisen. Die Segmente erhalten beispielsweise als Zuordnungsmerkmal eine Codierung, Nummerierung und/oder Farbzuweisung entsprechend der Dynamik in den Zeitreihendaten. Eine Zuordnung der Segmente mit unterschiedlicher Dynamik zueinander ist nicht auf die genannten Zuordnungsmerkmale begrenzt. Ferner können weitere Zuordnungsmerkmale zum Veranschaulichen unterschiedlicher Dynamik in den Zeitreihendaten verwendet werden.

Der Begriff System bezeichnet allgemein eine Gesamtheit von Elementen, die so aufeinander bezogen bzw. miteinander verbunden sind und in einer Weise interagieren, dass sie als eine aufgaben-, sinn- oder zweckgebundene Einheit angesehen werden können. Eine Systemkomponente ist ein einzelner der Bestandteile, die das System bilden.

Die Zeitdauer gibt die Zeit an, über welche die Zeitreihendaten einer Systemkomponente aufgezeichnet bzw. empfangen werden. Die Zeitdauer kann in Abhängigkeit der Funktion der Systemkomponente beispielsweise einen Bereich von Micro Sekunden, Millisekunden, Sekunden, Stunden, Tagen, Wochen umfassen.

Die Zeitreihendaten werden für eine bessere Verarbeitung in Zeitreihenabschnitte zerschnitten. Ein Segment kann mehrere Zeitreihenabschnitte umfassen. Beispielsweise kann ein Experte definieren, welche Größe der Zeitreihenabschnitte für die entsprechende Systemkomponente sinnvoll ist, um nutzbare Daten für das Bestimmen von Segmenten aufzuzeichnen.

Unter einem Cluster ist eine Menge von Objekten, beispielsweise Daten, mit gleichen Eigenschaften zu verstehen. Beispielsweise können die Daten gemäß einem normalen Zustand einer Systemkomponente mit gleicher Dynamik einem Cluster zugeordnet sein und Daten gemäß einer Anomalie in der Systemkomponente einem Cluster unterschiedlich des Clusters mit gleicher Dynamik zugeordnet sein.

Der vorliegenden Erfindung liegt die Kenntnis zugrunde, dass das Erzeugen von großen Mengen an Beispieldaten, die für das Maschinenlernen notwendig sind, einen großen zeitlichen Aufwand und Arbeit für einen Experten darstellt. In vorteilhafter Weise werden größere Datenmengen in kürzeren Zeitabschnitten verarbeitet und können nach der Zuordnung zu Segmenten mit einem Label gekennzeichnet werden. Der Prozess des Zuordnens zu Segmenten und des Kennzeichnens der Segmente mit einem Label ist schneller und einfacher durchzuführen. Zudem muss ein Experte nicht mehr den Startzeitpunkt und den Endzeitpunkt der Daten zum Kennzeichnen mit einem Label manuell anwählen. Vielmehr bekommt er den Start- und Endzeitpunkt durch die vorliegende Erfindung anhand der bestimmten Segmente vorgegeben. Somit können ermittelte Zeitreihendaten schneller und mit geringeren Kosten mit Labels versehen werden.

Zudem sind die resultierenden Labels in dem Sinne zueinander konsistent, da Segmente mit gleicher Dynamik in den Zeitreihendaten nicht mit einem Label für ein normales Funktionieren der Systemkomponente und mit einem Label für ein Abnormales Funktionieren der Systemkomponente zur gleichen Zeit gekennzeichnet sein können. Die Labels werden genauer platziert und die mit dem Label gekennzeichneten Zeitreihendaten sind präziser und führen zu einem verbesserten Maschinenlernen.

Weiterhin können bei bereits erstellten und vorhandenen Labels Inkonsistenten aufgedeckt werden. Dies ist dann der Fall, wenn bereits bestehende Labels noch einmal zu gewiesen werden.

In vorteilhafter Weise führen die oben genannten Vorteile zu verbesserten Trainingsdaten für Anomalie Erkennungsmodelle und die Qualität des Maschinenlernen Modells wird verbessert.

Ferner kann durch das leichtere und effizientere Zuordnen von Labels in den Zeitreihendaten das Durchführen einer Anomalie Detektion in einem System durchgeführt werden. Hierbei ist davon auszugehen, dass diese Anomalien in dem System noch nicht in Erscheinung getreten sind. Somit kann festgestellt werden, welche Semantik hinter welchen Daten steht und diese können mit einem Label beispielsweise für Normalbetrieb gekennzeichnet sein. Zudem kann eine Warnung ausgegeben werden, wenn ein aktueller Betriebszustand nicht dem Normalbetrieb entspricht, unabhängig davon, welcher Betriebszustand vorliegt und ob dieser Betriebszustand bekannt ist.

Weiteren Merkmale und Vorteile der Erfindung sind in den Ausführungsformen beschrieben.

Bei einer möglichen Ausführungsform des erfindungsgemäßen Verfahrens wird in einem Schritt für die Segmente die Zuordnung der Zeitreihenabschnitte mit gleichen Merkmalen zu einem Cluster wiederholt.

In vorteilhafter Weise kann somit eine Verteilung der Daten der Zeitreihendaten ein weiteres Mal überprüft werden. Ist davon auszugehen, dass Daten die Zugehörigkeit zu einem Cluster ändern, kann die Verteilung auf die Cluster neu geschätzt werden und eine weitere Berechnung des Hidden-Markov-Models erfolgen. Wenn eine erste Segmentierung erfolgt ist, kann dieser Vorgang in vorteilhafter Weise optional wiederholt erfolgen. Die Daten der Zeitreihendaten in einem Zeitreihenabschnitt wurden zu einem Segment zugeordnet. Die Daten können bei einer Wiederholung zur Überprüfung der Verteilung neu zugeordnet werden. Die Verteilung der Daten wird neu berechnet und die Zuteilung über die Zeit wird mit dem Hidden-Markov-Model neu berechnet. Dieser Vorgang erfolgt solange, bis sich keine Zuordnung der Daten zu einem Segment mehr ändert.

Bei einer möglichen Ausführungsform des erfindungsgemäßen Verfahrens wird die Übergangsmatrix des Hidden-Markow-Models empirisch bestimmt.

In vorteilhafter Weise beruht die Übergangsmatrix auf gewonnen Erfahrungen über die Systemkomponente aus dem Betrieb.

Bei einer möglichen Ausführungsform des erfindungsgemäßen Verfahrens beruht die Übergangsmatrix des Hidden-Markow-Models auf den Systemdaten eines Assistenzsystems.

Das beschriebene Assistenzsystem kann hierbei eine weitere Recheneinheit verbunden über ein Kommunikationssystem mit der Vorrichtung gemäß der vorliegenden Erfindung darstellen. Das Assistenzsystem kann nach angelernten Modellen die Übergangsmatrix des Hidden-Markow-Models weiter spezifizieren und diese somit an sich ändernde Dynamiken in den Zeitreihendaten der Systemkomponente anpassen.

Alternativ können diese angelernten Modelle auf dem Wissen eines Experten für die Systemkomponente beruhen. Weiterhin alternativ kann ein Experte die Übergangsmatrix des Hidden-Markow-Models vorgeben.

In vorteilhafter Weise kann durch das Assistenzsystem beurteilt werden, wie oft die Zeitreihendaten der Systemkomponente ihre Dynamik wechseln. Umfassen die empfangen Zeitreihendaten einen zu häufigen Segmentwechsel, der für die Systemkomponente basierend auf Erfahrungswerten atypisch ist, kann das Assistenzsystem eingreifen. Es ist ebenso vorteilhaft, wenn beispielsweise die Systemkomponente gemäß den Zeitreihendaten zu stabil ist, obwohl die Segmente dynamischer sind und häufiger ein Segmentwechsel in den Zeitreihendaten auftritt, dass das Verhalten angepasst werden kann. Dieses Verhalten kann durch die Vorgabe einer Übergangsmatrix gesteuert werden.

In vorteilhafter Weise wird mittels des Hidden-Markow-Models die zeitliche Dimension für das Selektieren der Cluster berücksichtigt. Die Zeitreihendaten werden über die zeitliche Dimension betrachtet und häufige Wechsel der Clusterzugehörigkeit werden berücksichtigt und geglättet. Das Hidden-Markow-Model ist ein Optimierungsverfahren mit einer Fehlerfunktion, womit eine Zuweisung an Daten nach gewählten Kriterien erfolgen kann. Weitere Modelle können als Optimierungsfunktion eingesetzt werden, solange die Modelle häufige Wechsel der Clusterzugehörigkeit berücksichtigen.

Bei einer möglichen Ausführungsform des erfindungsgemäßen Verfahrens sind die Zeitreihenabschnitte in ihrer Größe konfigurierbar.

In vorteilhafter Weise können die Zeitreihenabschnitte auf die jeweiligen empfangenen Zeitreihendaten unterschiedlicher Systemkomponenten angepasst werden. Somit können Dynamiken mit hoher Frequenz, als auch mit geringer Frequenz in den Zeitreihendaten analysiert werden.

Bei einer möglichen Ausführungsform des erfindungsgemäßen Verfahrens umfassen die Merkmalsdefinitionen das Niveau der Zeitreihendaten, ein Rauschen der Zeitreihendaten, den Gradienten der Zeitreihendaten oder die Standardabweichung.

In vorteilhafter Weise können somit auf Basis der Merkmalsdefinitionen die empfangen Zeitreihendaten mit gleicher Dynamik in Abschnitte aufgeteilt werden. Auf Basis der Merkmaldefinitionen können gleiche Dynamiken in den Zeitreihendaten ermittelt und einem Cluster zugeordnet werden. Beispielsweise wird durch das Verfahren gemäß der Erfindung in bestimmten Bereichen der Zeitreihendaten eine hohe Varianz festgestellt, die ein deutlich höheres Niveau aufweisen. Diese Bereiche weisen die gleiche Dynamik auf und können einem Cluster zugeordnet werden.

Bei einer möglichen Ausführungsform des erfindungsgemäßen Verfahrens ist das probalistische Beschreibungsmodell ein Gaußsches Vermischungsmodell oder ein Vermischungsmodell auf Basis einer Studentischen t-Verteilung.

In vorteilhafter Weise kann die gaußsche Verteilung ein weiteres Mal transformiert werden. Das Zuordnen der Zeitreihenabschnitte ist nicht auf das gaußsche Zuordnen zu Clustern beschränkt. Ferner können weitere parametrische Verteilungen verwendet werden und/oder diese in einem gemeinsamen Zuordnen zu Clustern verwendet werden. Dabei sollte jedes Cluster eine probalistische Interpretation aufweisen, so dass die Wahrscheinlichkeit eines Punktes im Merkmalsraum eines bestimmten Clusters berechnet werden kann.

Das Vermischungsmodell auf Basis der Studentischen t-Verteilung ist hierbei robuster gegenüber Ausreisern in den Zeitreihendaten, die bei dem Gaußschen Vermischungsmodell zu einer Deformation führen können. Das Vermischungsmodell auf Basis der Studentischen t-Verteilung korrigiert geringfügiger und ist somit robuster.

Bei einer möglichen Ausführungsform umfassen die Merkmalsdefinitionen die Varianz, den Mittelwert, den Median oder den Logarithmus der Varianz. Die genannten Merkmalsdefinitionen stellen hierbei keine abschließende Auflistung dar. Ferner sind weitere Merkmale, die eine Verteilung der Zeitreihendaten beschreiben, anwendbar.

Bei einer möglichen Ausführungsform werden die Zeitreihendaten der Systemkomponente für eine semantische Zuweisung vorbereitet.

Die semantische Zuweisung ist relevant für das Maschinenlernen und verbessert die Effizienz und Qualität des Maschinenlernens. Ein vergebenes Label für ein Segment stellt somit die semantische Bewertung von diesem Abschnitt dar.

Die Erfindung wird nachfolgend anhand von Ausführungsbeispielen mit Hilfe der Figuren näher erläutert. Es zeigen:
- Figur 1: eine schematische Darstellung des Verfahrens gemäß einem Ausführungsbeispiel der Erfindung,
- Figur 2: eine schematische Darstellung von segmentierten Zeitreihendaten mit dem Verfahren gemäß dem Ausführungsbeispiel der Erfindung,
- Figur 3: eine schematische Darstellung des Verfahrens gemäß einem weiteren Ausführungsbespiel der Erfindung,
- Figur 4: eine schematische Darstellung von beispielhaften Zeitreihendaten,
- Figur 5: eine weitere schematische Darstellung von beispielhaften Zeitreihendaten,
- Figur 6: eine schematische Darstellung von Clustern in den beispielhaften Zeitreihendaten nach dem Verfahren gemäß dem Ausführungsbeispiel der Erfindung,
- Figur 7: eine schematische Darstellung von Segmenten in den beispielhaften Zeitreihendaten nach dem Verfahren gemäß dem Ausführungsbeispiel der Erfindung,
- Figur 8: eine schematische Darstellung eine Vorrichtung zum Bestimmen von Segmenten gemäß einem Ausführungsbeispiel der Erfindung,
- Figur 9: eine schematische Darstellung einer Bereitstellungsvorrichtung mit Computerprogrammprodukt gemäß einem Ausführungsbeispiel der Erfindung.

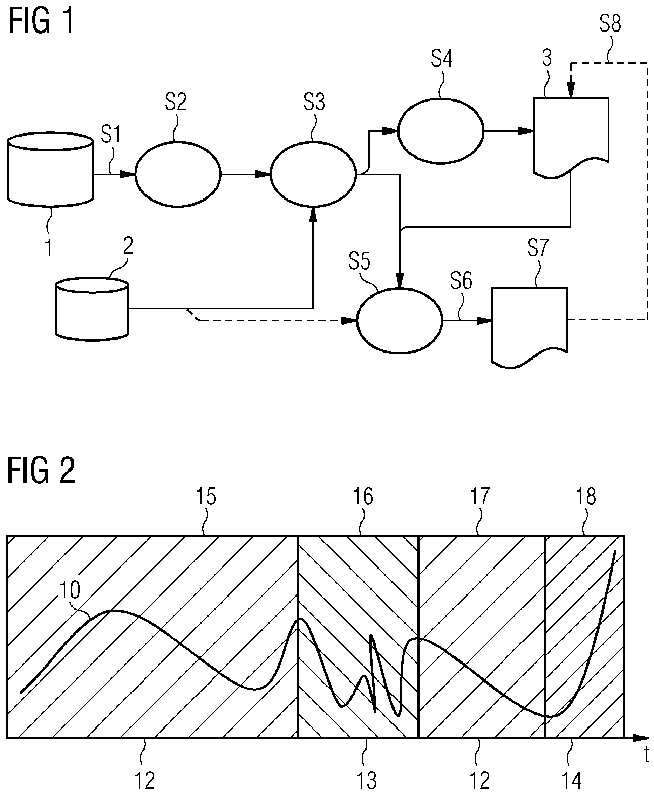

Figur 1 zeigt schematisch den Ablauf des Verfahrens zum Bestimmen von Segmenten 15, 16, 17, 18 in empfangenen Zeitreihendaten 10 einer Systemkomponente 1. Eine Systemkomponente 1 ist vorgesehen, Zeitreihendaten 10 bereitzustellen. Die Zeitreihendaten 10 werden über eine bestimmte Zeitdauer t in einem ersten Schritt S1 empfangen. Die empfangenen Zeitreihendaten 10 werden in aufeinanderfolgende, beispielsweise überlappende Zeitreihenabschnitte 11-i mit konfigurierbarer Größe zerlegt S2. Bezugszeichen 11-i bezieht sich auf alle Zeitreihenabschnitte als Ganzes. Bezugszeichen 11-1, beispielsweise bezeichnet den ersten Zeitreihenabschnitt der Zeitreihendaten 10 im Bezug auf die Zeitdauer t, wobei t den maximalen zeitlichen Wert der Zeitreihendaten 10 darstellt. Durch ein Assistenzsystem 2 werden Merkmalsdefinitionen bereitgestellt. Auf Basis der Merkmalsdefinitionen werden Merkmale für jedes Signal in den Zeitreihendaten 10 der Zeitreihenabschnitte 11-i ermittelt S3. Die Merkmalsdefinitionen charakterisieren die Zeitreihenabschnitte 11-i, die zu einem gleichen Systemzustand der Systemkomponente 1 gehören. Beispielsweise kann das die statistische Messung der Varianz und den Mittelwert für einen Sensor A und den Gradienten und die Varianz für einen Sensor B der Systemkomponente 1 umfassen. In einem weiteren Schritt werden die Zeitreihenabschnitte 11-i mit gleichen Merkmalen zu jeweils einem Cluster 12, 13, 14 zugeordnet S4. Der Cluster 12, 13, 14 wird auf Basis eines vorgegebenen probalistischen Beschreibungsmodells 3 gebildet. Beispielsweise kann das probalisitsche Beschreibungsmodell 3 ein Gaußsches Vermischungsmodell sein, bei dem jeder Cluster 12, 13, 14 einer Gaußschen Verteilung entspricht. Die Gaußsche Verteilung kann beispielsweise durch den Mittelwertsvektor und Varianz-Kovarianz Matrix definiert werden. Alternativ kann das probalistische Beschreibungsmodell 3 ein Vermischungsmodell auf Basis einer Studentischen t-Verteilung aufweisen. Ferner können weitere, nicht aufgeführte Vermischungsmodelle verwendet werden. In einem weiteren Schritt S5 wird ein Hidden-Markow-Model auf die Merkmale 4 in den Zeitreihenabschnitten 11-i angewendet. Jeder der Zustände des Hidden-Markow-Models entspricht einem gebildeten Cluster in dem probalistischem Beschreibungsmodell 3. Die Transitionsmatrix kann empirisch geschätzt werden oder auf Basis von Wissen über die Systemkomponente 1 durch ein Assistenzsystem 2 bestimmt werden. Es werden diejenigen Zeitreihenabschnitte 11-i selektiert S6, die über die Zeitdauer der Zeitreihendaten 10 den gleichen Zustand des Hidden-Markow-Models aufweisen. Die wahrscheinlichste Zustandsfolge für Zeitreihendaten 10 kann beispielsweise durch die Verwendung des Viterbi Algorithmus berechnet werden. Die wahrscheinlichste Zustandsfolge beschreibt die Segmentierung der Zeitreihendaten 10. Es werden diejenigen selektierten Zeitreihenabschnitte 11-i zu jeweils einem Segment 15, 16, 17, 18 zugeordnet, die zeitlich aufeinanderfolgend zusammenliegen S7.

Weiterhin ist in einer möglichen Ausführungsform vorgesehen, die Clusterbeschreibung auf Basis der gefundenen Segmente zu verfeinern. Dies erfolgt durch ein wiederholtes Zuordnen S8 der der Zeitreihenabschnitte 11-i mit gleichen Merkmalen zu einem Cluster. Dieses Vorgehen folgt dem Muster der Erwartungsmaximierung, das auch im klassischen K-Means Clustering verwendet wird.

In der Figur 2 sind segmentierte Zeitreihendaten 10 schematisch dargestellt. Die dargestellten Zeitreihendaten 10 weisen Zeitreihenabschnitte 11-i mit Merkmalen 4 auf. Die Zeitreihenabschnitte 11-i mit gleichen Merkmalen 4, beispielsweise einer gleichen Dynamik, werden zu Cluster 12, 13, 14 zugeordnet. Zeitreihenabschnitte 11-i mit gleicher Dynamik werden dem gleichen Cluster 12, 13, 14 zugeordnet. Beispielsweisen weisen die Zeitreihenabschnitte 11-i in Cluster 12 die gleiche Dynamik auf. Die Zeitreihenabschnitte 11-i in Cluster 13 und 14 weisen eine unterschiedliche Dynamik im Vergleich zu einander und zu Cluster 12 auf. Es werden diejenigen Zeitreihenabschnitte 11-i selektiert, die über die Zeitdauer t der Zeitreihendaten 10 den gleichen Zustand des Hidden-Markow-Models aufweisen. Die selektierten Zeitreihenabschnitte 11-i, die zeitlich aufeinanderfolgend zusammenliegen, werden einem Segment 15, 16, 17, 18 zugeordnet. Die Zeitreihendaten 10 der Fig. 2 weisen keine zeitlich aufeinanderfolgenden Zeitreihenabschnitte 11-i auf, die über die Zeitdauer t der Zeitreihendaten 10 den gleichen Zustand des Hidden-Markow-Models aufweisen. Jeder Cluster 12, 13, 14 weist eine unterschiedliche Dynamik auf. Die gleiche Dynamik der zwei Cluster 12 wird durch die Dynamik des Clusters 13 getrennt. Diesbezüglich wird jeder selektierte Zeitreihenabschnitt 11-i, bzw. jeder Cluster 12, 13, 14 einem Segment 15, 16, 17, 18 zugeordnet.

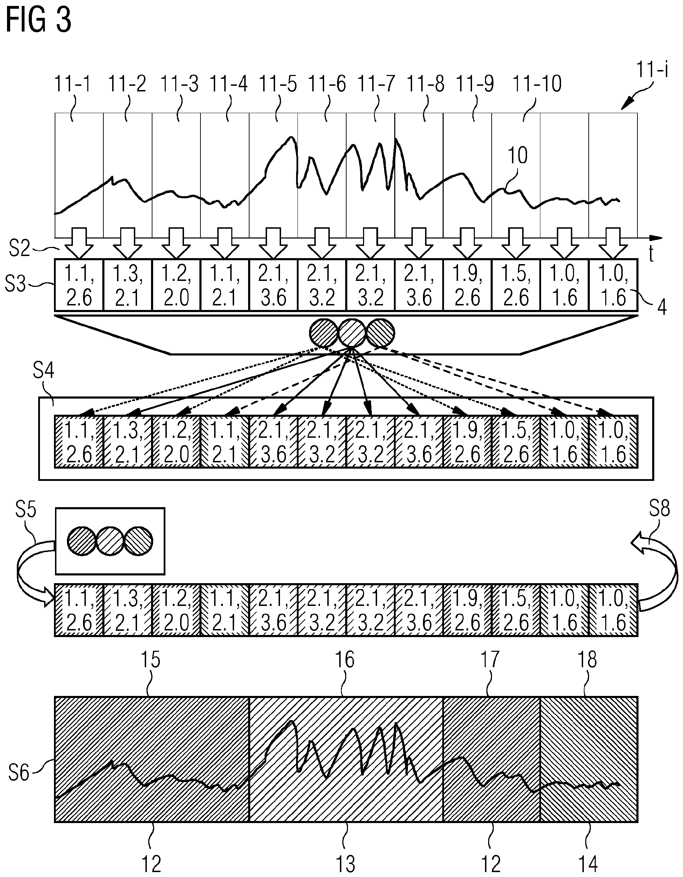

Das Verfahren der vorliegenden Erfindung ordnet jedes Datum der Zeitreihendaten 10 einem Cluster 12, 13, 14, beispielsweise dem Cluster 12, zu. Unterschiedliche Segmente 15 und 17 entsprechen dem Cluster 12 , welches unterschiedliche Zeitreihenabschnitte 11-i in den Zeitreihendaten 10 mit der gleichen Dynamik, wie beispielsweise durch die Merkmalsdefinitionen vorgegeben, darstellen, aber nicht zeitlich aufeinanderfolgend zusammenliegen (Fig. 2). Gleiche Segmente, beispielsweise Segment 15 entsprechen dem Cluster 12, welches unterschiedliche Zeitreihenabschnitte 11-i in den Zeitreihendaten 10 mit gleicher Dynamik, wie beispielsweise durch die Merkmalsdefinition vorgegeben darstellen und die zeitlich aufeinander folgend zusammenliegen (Fig. 3).

Die mit dem Verfahren sowie der Vorrichtung 20 bestimmten Segmente können für das Kennzeichnen mit Labels durch einen Experten in zwei unterschiedlichen Anwendungsfällen eingesetzt werden.

In einem ersten Anwendungsfall wird davon ausgegangen, dass für die empfangenen Zeitreihendaten noch keine Labels existieren. In diesem Anwendungsfall kann ein Anwender des Verfahrens, sowie der Vorrichtung, die Segmente 15, 16, 17, 18 direkt mit Labels kennzeichnen, anstatt auf manuellem Weg die Labels mit einem neuen Start- und Endzeitpunkt anzulegen. Dies kann beispielsweise in einer Desktopanwendung oder einer Webanwendung durch die Auswahl eines bestimmten Segments 15, 16, 17, 18 mittel Anwahl und dem Zuweisen eines Labels erfolgen. In vorteilhafter Weise erfolgt bei einer Zuweisung eines Labels an das Segment 15, an alle Segmente ebenfalls die Zuweisung des gleichen Labels automatisch, die dem gleichen Cluster 12 und somit der gleichen Dynamik der Systemkomponente gemäß der Merkmalsdefinition entsprechen.

In einem zweiten Anwendungsfall sind bereits Segmente der Zeitreihendaten 10 mit Labels versehen. Diese wurden beispielsweise durch einen Experten der Systemkomponente 1 vergeben. In diesem Anwendungsfall kann das Verfahren und die Vorrichtung zur Analyse und Konsistenzprüfung der durch den Experten vergebenen Labels verwendet werden. Die Konsistenzprüfung kann zu einer Rückmeldung an den Experten führen, um beispielsweise die Anwahl der Labels an den Segmenten zu verfeinern und/oder die relevanten Merkmalsdefinitionen zu verfeinern, um die Inkonsistenz zu entfernen und die Qualität der gekennzeichneten Zeitreihendaten für das Maschinenlernen zu verbessern.

Figur 3 zeigt schematisch den Ablauf des Verfahrens zum Bestimmen von Segmenten 15, 16, 17, 18 in empfangenen Zeitreihendaten 10 einer Systemkomponente 1. Eine Systemkomponente 1 ist vorgesehen, Zeitreihendaten 10 bereitzustellen. Die Zeitreihendaten 10 werden in separate Zeitreihenabschnitte 11-i in einem Schritt S2 zerlegt. Die Anzahl der Zeitreihenabschnitte 11-i in die die Zeitreihendaten 10 zerlegt werden, entspricht einem Konfigurationsparameter abhängig von dem System bzw. der Systemkomponente. Beispielsweise kann die Anzahl der Zeitreihenabschnitte 11-i über die Zeitdauer t der Zeitreihendaten 10 so gewählt werden, dass eine ausreichend hohe Anzahl an Zeitreihendaten 10 in den Zeitreihendaten 10 der Zeitreihenabschnitte 11-i zum Bestimmen von Segmenten 15, 16, 17, 18 vorliegt.

Für jeden Zeitreihenabschnitt 11-i werden in einem Schritt S3 Merkmale 4 basierend auf Merkmalsdefinitionen berechnet. Beispielsweise umfassen die Merkmale 4 den Mittelwert und die Varianz. In Fig. 3 entspricht beispielsweise der Mittelwert dem Wert 1.1 und die Varianz dem Wert 2.6 der Zeitreihendaten 10 in dem ersten Zeitreihenabschnitt 11-1 der Zeitreihendaten 10. Alternativ können auch andere Merkmale und/oder Merkmalskombinationen berechnet werden. Die empfangen Zeitreihendaten 10 (Rohdaten) wurden in eine Zeitreihe von Merkmalen 4 gewandelt.

Auf die Zeitreihe von Merkmalen 4 kann ein probabilistisches Beschreibungsmodell 3 angewendet werden. Beispielsweise kann das probabilistische Beschreibungsmodell 3 ein Gaußsches Vermischungsmodell oder ein Vermischungsmodell auf Basis einer Studentischen t-Verteilung aufweisen. In Fig. 3 erfolgt das Zuordnen der Zeitreihenabschnitte 11-i mit gleichen Merkmalen 4 zu jeweils einem Cluster 12, 13, 14. Das Cluster 12, 13, 14 wird auf Basis eines Gaußschen Vermischungsmodells gebildet. Jedes gefundene Cluster 12, 13, 14 kann durch eine Gaußsche Normalverteilung bzw. eine separate Gauß-Glocke dargestellt werden. In der Fig. 3 wurden beispielsweise drei verschiedene Gauß-Glocken ermittelt und jeder Gauß-Glocke kann einem jeweiligen Cluster zugewiesen werden.

Auf die zu Clustern 12, 13, 14 zugewiesene Reihe von Merkmalen 4 kann in einem Schritt S5 ein Hidden-Markow-Model angewendet werden. Das Hidden-Markow-Model weist eine Vielzahl an diskreten Zuständen auf, die der Anzahl der Cluster 12, 13, 14 entsprechen. Durch das Hidden-Markow-Model erfolgt eine Berücksichtigung der zeitlichen Information und somit eine Glättung der Zeitreihendaten 10. Hierbei ist davon auszugehen, dass zwischen den einzelnen Clustern kein ständiger Wechsel erfolgt. Für einen Wechsel eines Zustands und somit in ein anderes Cluster 12, 13, 14 ist eine entsprechende Evidenz notwendig. Beispielsweise erfolgt nach den ersten zum Cluster 12 zugeordneten Zeitreihenabschnitt 11-1 mit dem Wert 1.1;2.6 ein Wechsel zu dem Cluster 13 (Zeitreihenabschnitt 11-2 mit dem Wert 1.3;2.1). Die Zeitreihenabschnitte 11-i werden im Verlauf der Zeitdauer t der Zeitreihendaten 10 aufsteigend bezeichnet. Mittel dem Hidden-Markow-Model erfolgt eine Neuzuordnung der Zeitreihenabschnitte 11-i zu entsprechenden Clustern. Beispielsweise ist der Zeitreihenabschnitt 11-2 gemäß der ermittelten Merkmale 4 dem Cluster 13 zugeordnet. Der Zeitreihenabschnitt 11-1 und der Zeitreihenschnitt 11-3 die vor und hinter dem Zeitreihenabschnitt 11-2 liegen, sind dem Cluster 12 zugeordnet. Somit liegt ein Clusterwechsel vor. Bis auf die Merkmale 4 des Zeitreihenabschnitts 11-2, liegt keine ausreichende Evidenz für einen Clusterwechsel vor. Da der vorhergehende Zeitreihenabschnitt 11-1 und der nachfolgende Zeitreihenschnitt 11-3 von dem Hidden-Markow-Model dem Cluster 12 zugeordnet sind, liegt keine ausreichende Evidenz für die Zuordnung des Zeitreihenabschnittes 11-2 zum Cluster 13 vor. Der Zeitreihenabschnitt 11-2 wird durch das Hidden-Markow-Model dem Cluster 12 neu zugeordnet. In vorteilhafter Weise wird somit eine Zuordnung ermittelt, die einen Clusterwechsel vermeidet, aber gleichzeitig plausibel ist. Die Neuzuordnung der Zeitreihenabschnitte erfolgt über alle Zeitreihenabschnitte 11-i der Zeitreihe der Merkmale, womit die Konsistenz der Clusterwechsel erhöht wird.

In einem weiteren Schritt S7 werden die selektierten Zeitreihenabschnitte 11-1 die zeitlich aufeinanderfolgend zusammenliegen zu jeweils einem Segment 15, 16, 17, 18 zugeordnet. Beispielsweise weisen die selektierten Zeitreihenabschnitte 11-1, 11-2, 11-3, 11-4 über die Zeitdauer t den gleichen Zustand des Hidden-Markow-Models auf und liegen aufeinanderfolgend zusammen. Die selektierten Zeitreihenabschnitte 11-1, 11-2, 11-3, 11-4 werden somit dem Segment 15 zugeordnet. Die selektierten Zeitreihenabschnitte 11-1, 11-2, 11-3, 11-4 sind dem gleichen Cluster 12 zugeordnet, wie die Zeitreihenabschnitte 11-9, 11-10. Die Zeitreihenabschnitte 11-9, 11-10 sind dem Segment 17 zugeordnet. In den Zeitreihenabschnitten 11-5, 11-6, 11-7, 11-8 zwischen dem Cluster 12 umfassend die Zeitreihenabschnitte 11-1, 11-2, 11-3, 11-4 und dem Cluster 12 umfassend die Zeitreihenabschnitte 11-9, 11-10 wurden Merkmale 4 unterschiedliche zu den Merkmalen in Cluster 12 ermittelt. Die Zeitreihenabschnitten 11-5, 11-6, 11-7, 11-8 sind dem Cluster 13 zugeordnet.

In einer alternativen Ausführungsform können Segmente mit einem Label durch ein Assistenzsystem 2 gekennzeichnet werden. In einer weiteren alternativen Ausführungsform können Segmente umfassend die gleiche Clusterzugehörigkeit mit einem gleichen Label durch ein Assistenzsystem 2 versehen werden.

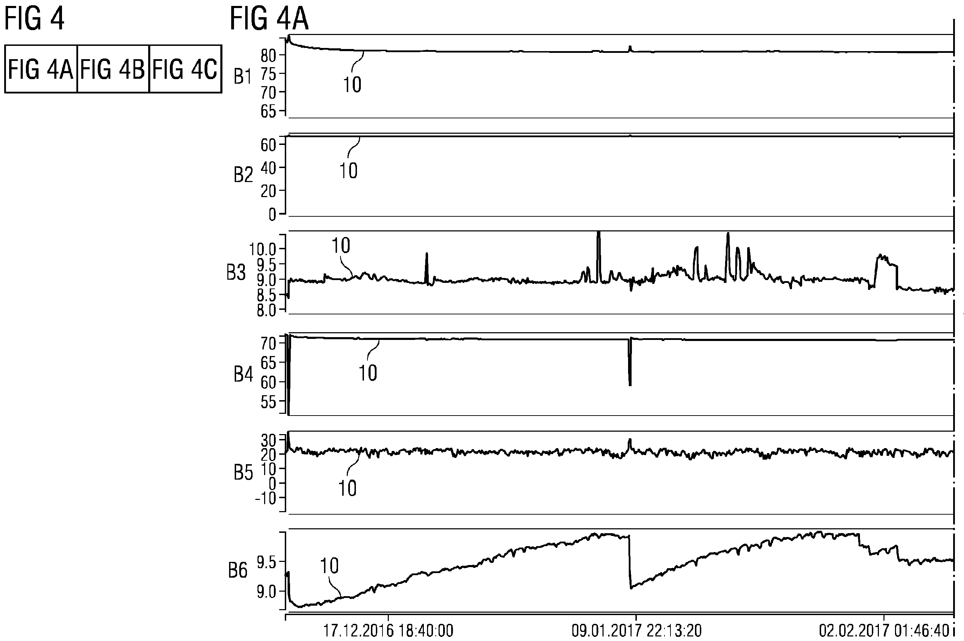

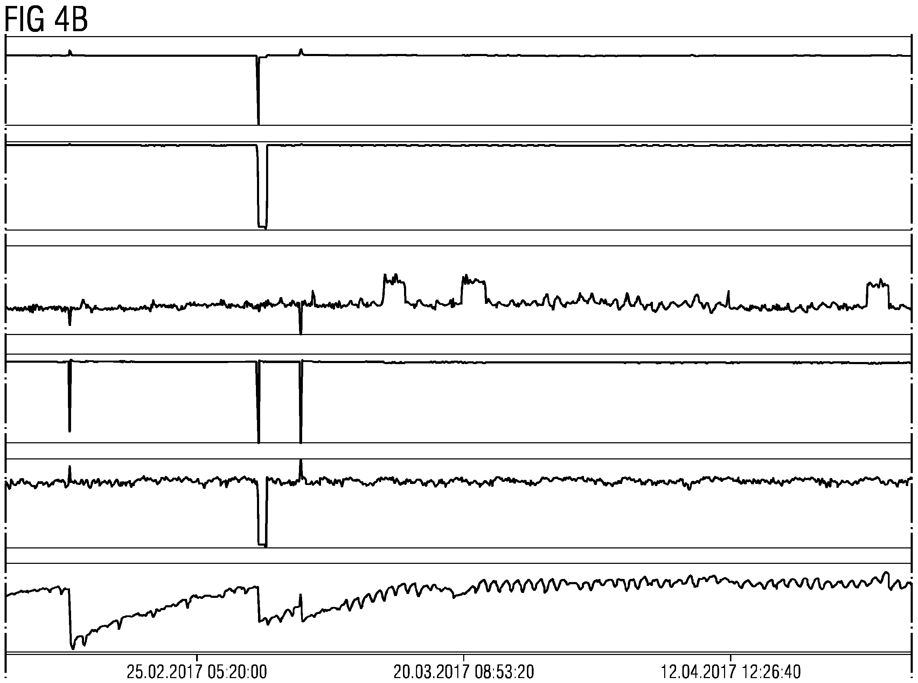

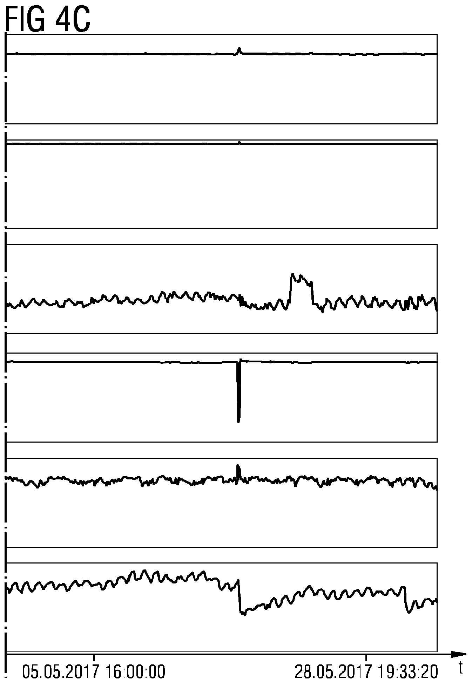

Figur 4 zeigt schematisch dargestellt verschiedene Zeitreihendaten 10 von sechs verschiedenen Systemkomponenten B1 bis B6. Die Zeitreihendaten 10 wurden über eine Zeitdauer t von den Systemkomponenten B1 bis B6 empfangen. In den Zeitreihendaten 10 sollen sowohl die Daten für einen normalen Zustand NZ der Systemkomponente im Betrieb als auch für einen schlechten Zustand der Systemkomponente im Betrieb ermittelt werden. Zudem soll eine Anomalie Detektion (abnormaler Zustand) über die Zeitreihendaten 10 erfolgen. Dafür müssen die entsprechenden Bereiche (normaler Zustand NZ, schlechter Zustand, abnormaler Zustand AZ) durch ein Label gekennzeichnet werden. Diese Label stellen die Voraussetzung für ein Maschinenlernen mit Trainingsdaten dar.

Ein Anwendungsfall der Erfindung liegt im Bereich der vorbeugenden Instandhaltung für Öl und Gas Technologie mit künstlicher Intelligenz. Beispielsweise kann die Erfindung auf elektrische Tauchpumpen angewendet werden.

Es werden Messungen von sechs Systemkomponenten 1, beispielsweise Sensoren für Motortemperatur B5, Einlasstemperatur B2, Motorstrom B4, Kopfdruck B3, Ringraumdruck B6 und Bodendruck B1 als Zeitreihendaten 10, beispielsweise über eine Frequenz von 0,2 Hz getaktet, empfangen. Diese Messungen beschreiben den Betriebszustand der Tauchpumpe, welcher als normaler Zustand NZ, Verschiebung im Arbeitspunkt, oder als abnormaler Zustand AZ (Anomalie) auftreten. Der abnormale Zustand AZ kann ferner in einzelne Typen unterteilt werden, beispielsweise Verstopfung oder Loch in der Leitung, gebrochene Welle usw. Sobald ein abnormaler Zustand AZ detektiert wird, kann der Betreiber darüber informiert werden, welche Pumpe der Vielzahl an Pumpen, beispielsweise in einem Ölfeld, ein abnormales Verhalten aufweist. Entsprechend können Gegenmaßnahmen zur Behebung des abnormalen Zustands AZ eingeleitet werden.

Um die Zustände während des Betriebs der Tauchpumpen zu bestimmen, werden Beispieldaten bzw. Trainingsdaten zum Anlernen bzw. Trainieren des künstlichen Intelligenz Modells benötigt. Für das Erstellen der Trainingsdaten sollte der Betreiber der Tauchpumpen mit Labels gekennzeichnete Daten bereitstellen. Die Labels stellen Zeitbereiche dar, die spezifisch für unterschiedliche Betriebszustände für eine Tauchpumpe sind. Diese mit Labels gekennzeichneten Daten stehen bei den Betreibern der Pumpen nicht zur Verfügung und müssen häufig erst erstellt werden was zeit- und kostenintensiv ist.

Mittels des Verfahrens sowie der Vorrichtung 20 gemäß der Erfindung können historisch empfangene Zeitreihendaten 10 von elektrischen Tauchpumpen segmentiert werden. Die Segmente 15, 16, 17 entsprechen unterschiedlichen Betriebszuständen. In vorteilhafter Weise muss der Experte, beispielsweise der Öl- und Gasingenieur die einzelnen Betriebszustände der Tauchpumpe in den Zeitreihendaten 10 nicht mehr manuell identifizieren, sondern kann die jeweiligen Segmente zu den entsprechenden Betriebszuständen der Tauchpumpe verifizieren und entsprechende Labels vergeben. Dies führt vorteilhaft zu einer Reduzierung des manuellen Aufwands und erhöht die Qualität der Labels. Mit einer hohen Anzahl an qualitativ hochwertigen Labels, kann das Maschinenlernen der künstlichen Intelligenzmodelle mit einem verringerten Aufwand durchgeführt werden.

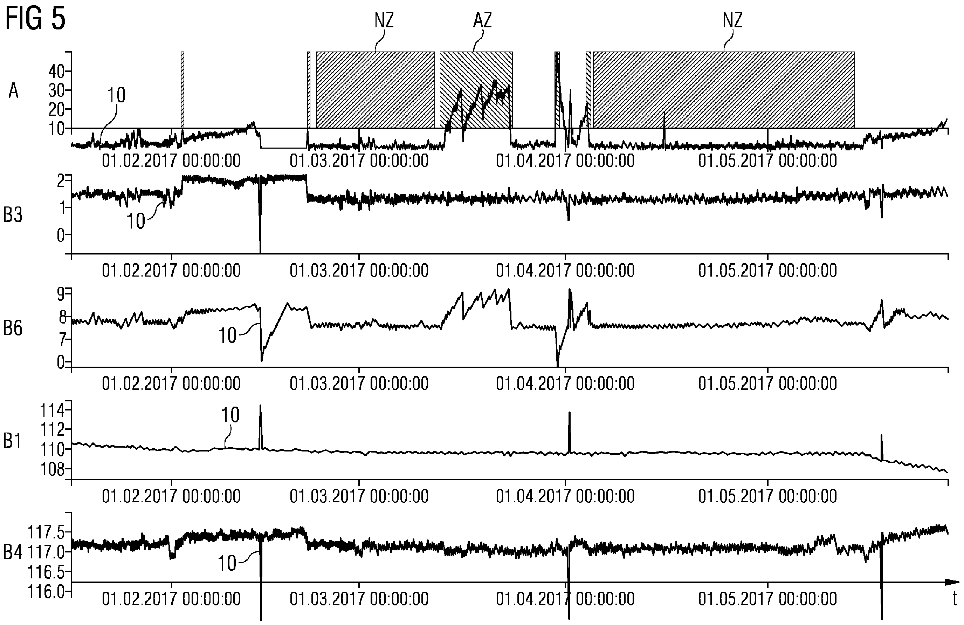

Figur 5 zeigt schematisch dargestellt verschiedene Zeitreihendaten 10 von vier verschiedenen Systemkomponenten B1, B3, B4 und B6. Zudem werden Zeitreihendaten 10 einer Anomalie, beispielsweise des abnormalen Zustands AZ einer Verstopfung der Tauchpumpe dargestellt. Den Zeitreihendaten 10 sind die Labels für normaler Zustand NZ und abnormaler Zustand AZ der Tauchpumpe zugeordnet. In den Bereichen, gekennzeichnet mit dem Label für normaler Zustand NZ, weisen die Zeitreihendaten 10 eine gleiche Dynamik auf. In dem Bereich, gekennzeichnet mit dem Label für abnormaler Zustand AZ, weisen die Zeitreihendaten 10 eine Dynamik verschieden zu der Dynamik im normalen Zustand NZ auf. Auf Basis der mit einem Label gekennzeichneten Zeitreihendaten 10 kann ein Maschinenlernen der künstlichen Intelligenzmodelle erfolgen.

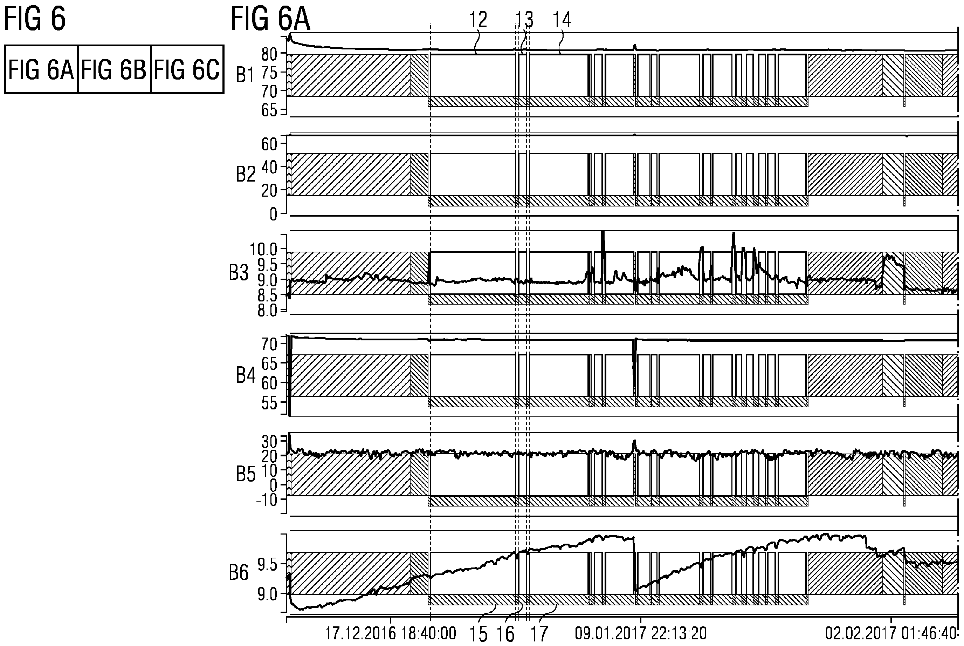

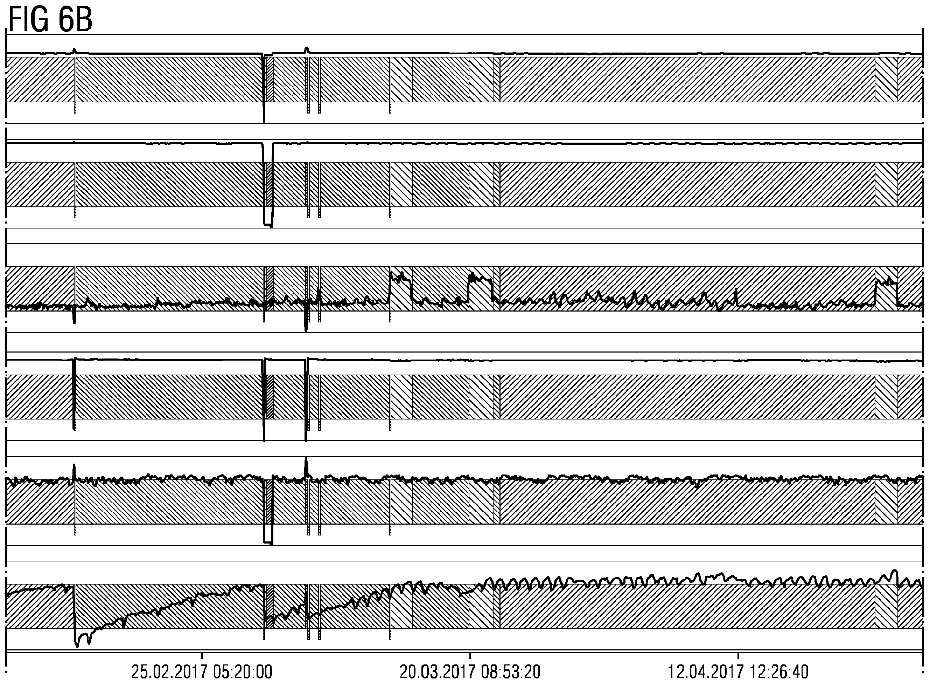

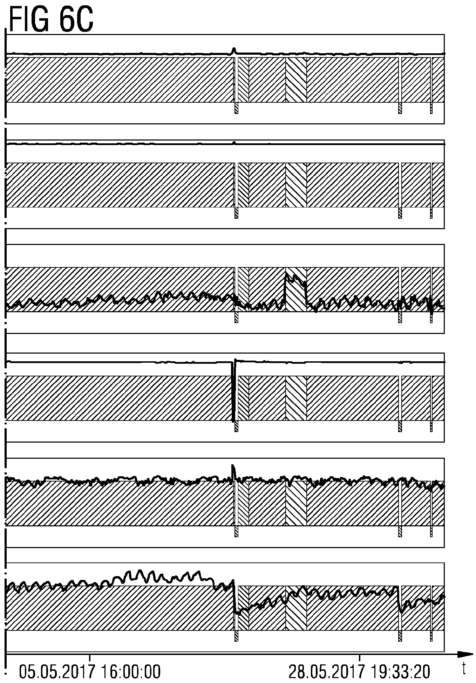

In Figur 6 sind die Zeitreihendaten 10 gemäß der Figur 4 dargestellt. Die Zeitreihendaten 10 sind entsprechend ihrer Dynamik gemäß den Merkmalsdefinitionen zu den Cluster 12, 13, 14 zugeordnet. Auf die Merkmale in den Zeitreihenabschnitten 11-i wird ein Hidden-Markow-Model angewendet, wobei ein Zustand des Hidden-Markow-Models dem gebildeten Cluster 12, 13, 14 entspricht. Aus den Zeitreihenabschnitten 11-i werden diejenigen selektiert, die über die Zeitdauer der Zeitreihendaten den gleichen Zustand des Hidden-Markow-Models aufweisen. Die selektierten Zeitreihenabschnitte die zeitlich aufeinanderfolgend zusammenliegen werden jeweils einem Segmente 15, 16, 17, 18 zugeordnet. Die Segmente 15, 16, 17, 18 die einem gleichen Cluster 12, 13, 14 entsprechen, können mit einem gleichen Label durch ein Assistenzsystem 2 gekennzeichnet werden.

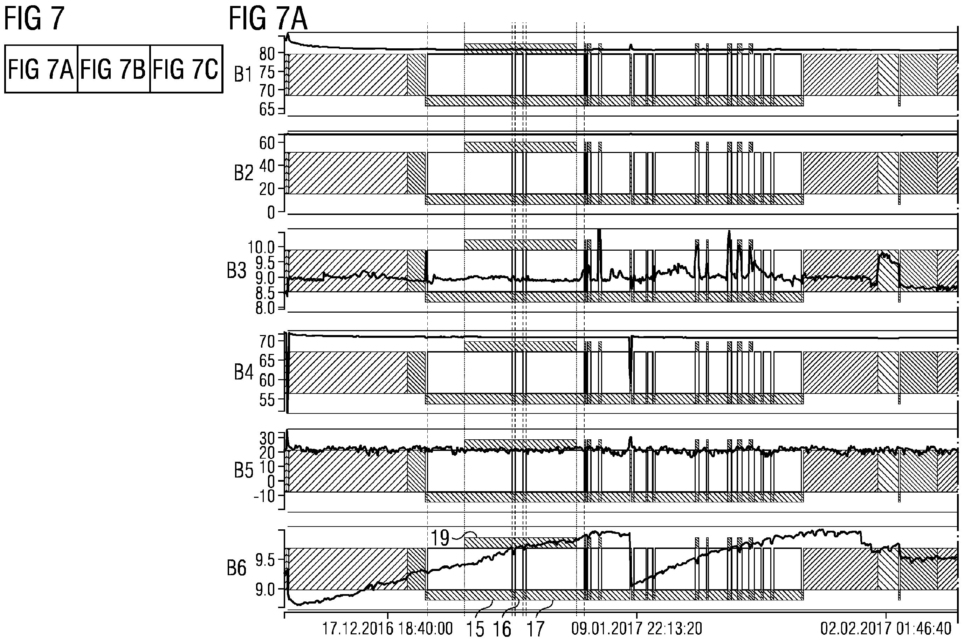

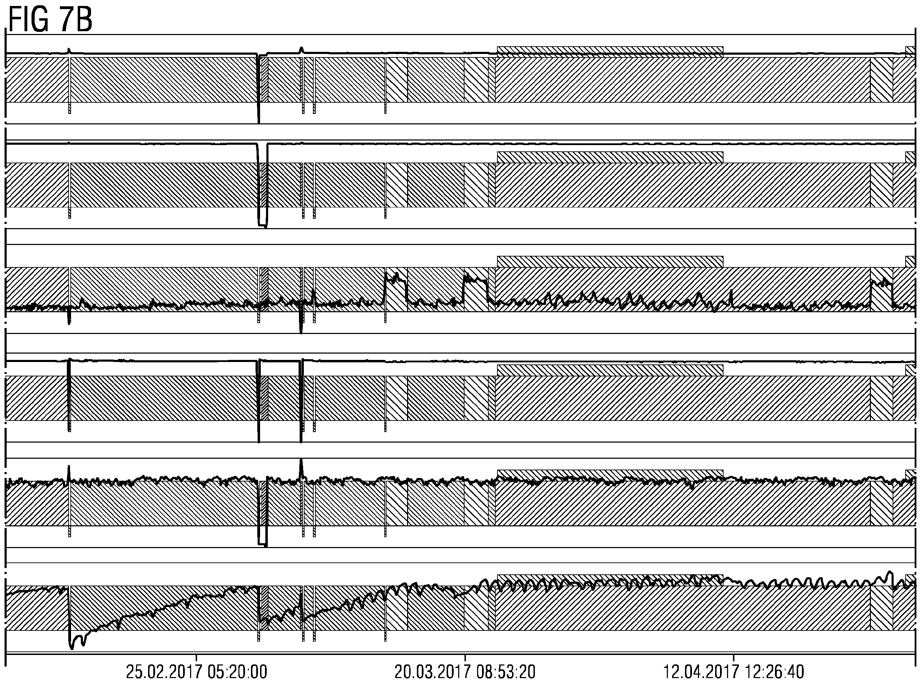

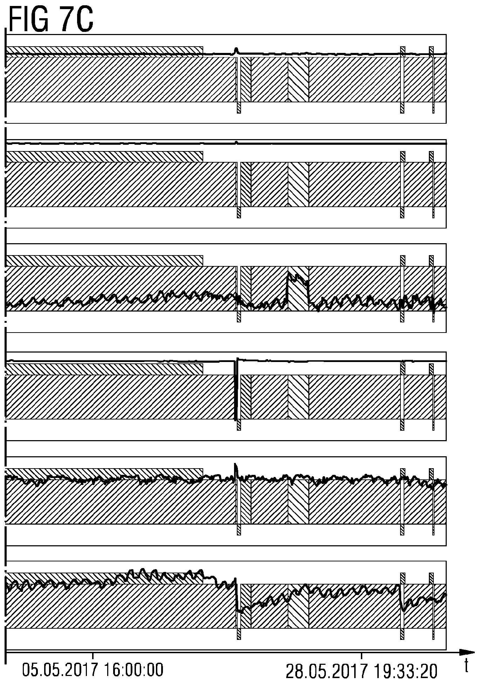

In Figur 7 sind die Zeitreihendaten 10 gemäß der Figur 6 dargestellt. Ferner weisen die Zeitreihendaten 10 der Figur 7 ein von einem Experten bestimmtes Segment 19 auf, das mit einem Label durch den Experten gekennzeichnet wurde. Diesbezüglich weist das Kennzeichen der Zeitreihen eine Inkonsistenz auf. Jedes Segment 15, 16, 17, 18 ermittelt durch das Verfahren gemäß der Erfindung weist eine unterschiedliche Dynamik auf und ist somit mit jeweils unterschiedlichen Labels zu kennzeichnen. Der Experte hat ein Label über alle drei Segmente 15, 16, 17, 18 angewendet. Das bedeutet, dass entweder die verwendeten Merkmale nicht der Argumentation des Experten der Systemkomponente entsprechen oder eine falsche Beschriftung durch den Experten erfolgt ist. Nach Ansicht des Experten kann beispielsweise das Segment 16 als nicht relevant für das Maschinenlernen angesehen werden. Dies kann zu einem fehlerbehafteten Maschinenlernen führen.

Gemäß der Erfindung entspricht jedes Segment 15, 16, 17, 18 einem Cluster 12, 13, 14. Bei dem Kennzeichnen der Segmente mit einem Label, wird das entsprechende Cluster 12, 13, 14 mit einem Label gekennzeichnet, sowie alle mit diesem verbundenen Cluster 12, 13, 14. Diesbezüglich werden Zeitbereiche in den Zeitreihendaten 10, die in dem gleichen Cluster liegen keine unterschiedlichen Labels zugewiesen. Das Kennzeichnen mit Labels ist somit konsistent mit der Dynamik innerhalb der Zeitreihendaten 10. In vorteilhafter Weise kann somit ein Kennzeichnen eines Segments 18 mit einem Label über Segmente unterschiedlicher Dynamik vermieden und die Konsistenz und Qualität der Label erhöht werden.

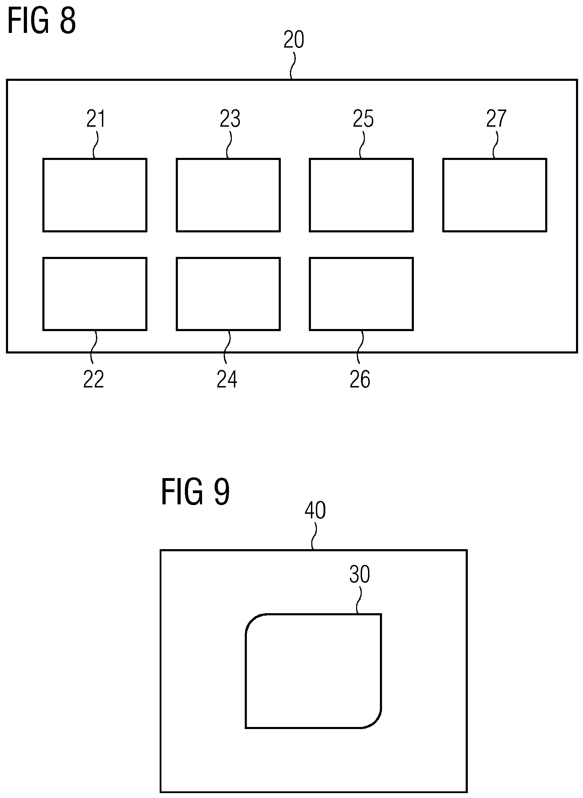

In Figur 8 bezeichnet Bezugszeichen 20 eine Vorrichtung zum Bestimmen von Segmenten in empfangenen Zeitreihendaten 10 einer Systemkomponente 1. Die Vorrichtung umfasst eine Empfangseinheit 21 zum Empfangen von Zeitreihendaten 10 von wenigstens einer Systemkomponente 1 über eine bestimmte Zeitdauer t. Die empfangenen Zeitreihendaten 10 werden mittels einer Zerlegeeinheit 22 in separate Zeitreihenabschnitte zerlegt. Einem Segment 15, 16, 17, 18 können mehrere Zeitreihenabschnitte 11-i zugewiesen werden. Anhand der Zeitreihendaten 10 muss festgelegt werden, welche zeitliche Auflösung des Zeitreihenabschnitts für eine Analyse der Dynamiken in den Zeitreihendaten 10 sinnvoll ist. Die zeitliche Auflösung ist abhängig von der Systemkomponente 1 bzw. dem System und der zu analysierenden Dynamiken, beispielsweise verursacht durch Anomalien.

Mittels der Ermittlungseinheit 23 werden Merkmale in den Zeitreihendaten 10 der separaten Zeitreihenabschnitte basierend auf Merkmalsdefinitionen ermittelt. Die Merkmale können beispielsweise das durchschnittliche Niveau (Mittelwert) und die Schwankungsbreite (Varianz) umfassen.

Anhand gleicher Merkmale, werden durch eine Zuordnungseinheit 24, die Zeitreihenabschnitte mit gleichen Merkmalen zu jeweils einem Cluster 12, 13, 14 auf Basis eines probalistischen Beschreibungsmodells zugeordnet. Somit sind alle Werte der Zeitreihendaten 10 einer jeweiligen Gruppe (Cluster) zugeordnet.

Weiterhin wird durch eine Anwendungseinheit 25 ein Hidden-Markow-Model auf die Merkmale 4 in den Zeitreihenabschnitten 11-1 angewendet, wobei ein Zustand des Hidden-Markow-Models dem gebildeten Cluster 12, 13, 14 entspricht. Durch das Hidden-Markow-Model wird analysiert, wie hoch die Wahrscheinlichkeit ist, dass sich das Cluster ständig ändert. Dabei wird davon ausgegangen, dass eine Systemkomponente eine bestimmte Dynamik aufweist und keine sich ständig ändernde, so dass jeder Zeitreihenabschnitt 11-i sich unterscheidende Dynamiken aufweist. Durch das Hidden-Markow-Model kann festgestellt werden, beispielsweise bei dem vorliegenden der charakteristischen Werte des Mittelwerts und der Varianz in einem Zeitreihenabschnitt 11-i, dass eine Gruppe ein niedriges Niveau aufweist und eine weitere Gruppe eine niedrige Varianz. Zudem können weitere Gruppen eine hohe Varianz aufweisen. Somit wird festgestellt, dass die Systemkomponente 1 verschiedene Dynamiken aufweist, wobei diese durch den Mittelwert und die Varianz charakterisiert werden. Diese Merkmale werden über die Zeit auf einen Wechsel in ihrer Dynamik analysiert. Somit ergibt sich für die Dynamik, wie hoch die Wahrscheinlichkeit ist, dass diese sich ändert und somit zu einem anderen Cluster zu zuordnen ist.

Weiterhin wird durch die Selektionseinheit 26 diejenigen Zeitreihenabschnitte 11-i selektiert, die über die Zeitdauer t der Zeitreihendaten 10 den gleichen Zustand des Hidden-Markow-Models aufweisen.

Mittels einer Zuordnungseinheit 27 werden diejenigen selektierten Zeitreihenabschnitte 11-i zu jeweils einem Segment 15, 16, 17, 18 einem Segment zugeordnet, die zeitlich aufeinanderfolgend zusammenliegen.

Durch die ermittelten Segmente 15, 16, 17, 18 können die empfangenen Zeitreihendaten 10 durch einen Experten effizienter und genauer mit einem Label gekennzeichnet werden.

In Figur 9 ist eine Bereitstellungsvorrichtung 40 dargestellt. Die Bereitstellungsvorrichtung 40 speichert das Computerpragrammprodukt 30 oder stellt dieses bereit. Das Computerprogrammprodukt 30 ist dazu ausgebildet, wenn es ausgeführt wird, das Verfahren gemäß der vorliegenden Erfindung durchzuführen. Mit dem Computerprogrammprodukt 30 werden die Segmente in den empfangenen Zeitreihendaten 10 einer Systemkomponente 1 bestimmt.

Obwohl die Erfindung im Detail durch die Ausführungsbeispiele näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Zusammenfassung der Erfindung

Die Erfindung betrifft ein Verfahren zum Bestimmen von Segmenten in empfangenen Zeitreihendaten einer Systemkomponente mit dem Schritt Empfangen von Zeitreihendaten von wenigstens einer Systemkomponente über eine bestimmte Zeitdauer. In einem weiteren Schritt werden die von einer Systemkomponente empfangenen Zeitreihendaten in separate Zeitreihenabschnitte zerlegt. In den Zeitreihendaten der separaten Zeitreihenabschnitte werden Merkmale basierend auf Merkmalsdefinitionen ermittelt. Die Zeitreihenabschnitte mit gleichen Merkmalen werden zu jeweils einem Cluster zugeordnet. Der Cluster wird auf Basis eines vorgegebenen probalisitschen Beschreibungsmodells gebildet. Auf die Merkmale in den Zeitreihenabschnitten wird ein Hidden-Markow-Model angewendet. Hierbei entspricht ein Zustand des Hidden-Markow-Models den gebildeten Clustern. In einem weiteren Schritt werden diejenigen Zeitreihenabschnitte selektiert, die über die Zeitdauer der Zeitreihendaten den gleichen Zustand des Hidden-Markow-Models aufweisen. In einem weiteren Schritt werden diejenigen selektierten Zeitreihenabschnitte zu jeweils einem Segment zugeordnet, die zeitlich aufeinanderfolgend zusammenliegen.

Es entfällt auf vorteilhafte Weise eine aufwändige, zeit- und kostenintensive manuelle Auswahl der Bereiche durch einen Experten in den Zeitreihendaten, die notwendige Trainingsdaten für ein Maschinenlernen umfassen. Zudem weisen die für die Trainingsdaten vergebenen Labels eine verbesserte Konsistenz und Qualität auf.

## Patentansprüche

1. Verfahren zum Bestimmen von Segmenten (15, 16, 17, 18) in empfangenen Zeitreihendaten (10) einer Systemkomponente (1) mit den Schritten:
Empfangen (S1) von Zeitreihendaten (10) von wenigstens einer Systemkomponente (1) über eine bestimmte Zeitdauer (t) ;
Zerlegen (S2) der empfangenen Zeitreihendaten (10) in separate Zeitreihenabschnitte (11-i);
Ermitteln (S3) von Merkmalen (4) in den Zeitreihendaten (10) der separaten Zeitreihenabschnitte (11-i) basierend auf Merkmalsdefinitionen;
Zuordnen (S4) der Zeitreihenabschnitte (11-i) mit gleichen Merkmalen (4) zu jeweils einem Cluster (12, 13, 14), wobei der Cluster auf Basis eines vorgegebenen probabilistischen Beschreibungsmodells (3) gebildet wird;
Anwenden (S5) eines Hidden-Markow-Models auf die Merkmale (19) in den Zeitreihenreihenabschnitten (11-i), wobei ein Zustand des Hidden-Markow-Models den gebildeten Clustern (12, 13, 14) entspricht;
Selektieren (S6) derjenigen Zeitreihenabschnitte (11-i), die über die Zeitdauer (t) der Zeitreihendaten (10) den gleichen Zustand des Hidden-Markow-Models aufweisen, und Zuordnen (S7) derjenigen selektierten Zeitreihenabschnitte (11-i) zu jeweils einem Segment (15, 16, 17, 18), die zeitlich aufeinanderfolgend zusammenliegen.

2. Verfahren nach Anspruch 1, wobei in einem Schritt für die Segmente (15, 16, 17, 18) die Zuordnung der Zeitreihenabschnitte (11-i) mit gleichen Merkmalen zu einem Cluster (12, 13, 14) wiederholt (S8) erfolgt.

3. Verfahren nach einem der vorhergehenden Ansprüche 1 oder 2, wobei eine Übergangsmatrix des Hidden-Markow-Models empirisch bestimmt wird.

4. Verfahren nach einem der vorhergehenden Ansprüche 1 oder 2, wobei eine Übergangsmatrix des Hidden-Markow-Models auf den Systemdaten eines Assistenzsystems (2) beruht.

5. Verfahren nach einem der vorhergehenden Ansprüche 1 bis 4, wobei die Zeitreihenabschnitte (11-i) in ihrer Größe konfiguriert werden.

6. Verfahren nach einem der vorhergehenden Ansprüche 1 bis 5, wobei die Merkmalsdefinitionen umfassen:
- Niveau der Zeitreihendaten (10);
- Rauschen der Zeitreihendaten (10);
- Gradienten der Zeitreihendaten (10);
- Standardabweichung in den Zeitreihendaten (10).

7. Verfahren nach einem der vorhergehenden Ansprüche 1 bis 6, wobei das probabilistische Beschreibungsmodell (3) ein Gaußsches Vermischungsmodell oder ein Vermischungsmodell auf Basis einer Studentischen t-Verteilung aufweist.

8. Vorrichtung (20) zum Bestimmen von Segmenten (13, 14, 15) in empfangenen Zeitreihendaten (10) einer Systemkomponente (1) umfassend:
eine Empfangseinheit (21) zum Empfangen von Zeitreihendaten (10) von wenigstens einer Systemkomponente (1) über eine bestimmte Zeitdauer (t);
eine Zerlegeeinheit (22) zum Zerlegen der empfangenen Zeitreihendaten (10) in separate Zeitreihenabschnitte (11-i) ;
eine Ermittlungseinheit (23) zum Ermitteln von Merkmalen (4) in den Zeitreihendaten (10) der separaten Zeitreihenabschnitte (11-i) basierend auf Merkmalsdefinitionen;
eine Zuordnungseinheit (24) zum Zuordnen der Zeitreihenabschnitte (10) mit gleichen Merkmalen (4) zu jeweils einem Cluster (12, 13, 14), der auf Basis eines vorgegebenen probabilistischen Beschreibungsmodells (3) gebildet wird;
eine Anwendungseinheit (25) zum Anwenden eines Hidden-Markow-Models auf die Merkmale (4) in den Zeitreihenabschnitten (11), wobei ein Zustand des Hidden-Markow-Models den gebildeten Clustern (12, 13, 14) entspricht;
eine Selektionseinheit (26) zum Selektieren derjenigen Zeitreihenabschnitte (11-i), die über die Zeitdauer (t) der Zeitreihendaten (10) den gleichen Zustand des Hidden-Markow-Models aufweisen, und
eine Zuordnungseinheit (27) zum Zuordnen derjenigen selektierten Zeitreihenabschnitte zu jeweils einem Segment (15, 16, 17, 18), die zeitlich aufeinanderfolgend zusammenliegen.

9. Computerprogrammprodukt (30) mit Programmbefehlen zur Durchführung des Verfahrens nach einem der vorhergehenden Ansprüche 1 bis 7.

10. Bereitstellungsvorrichtung (40) für das Computerprogrammprodukt (30) nach Anspruch 9, wobei die Bereitstellungsvorrichtung (40) das Computerprogrammprodukt (30) speichert und/oder bereitstellt.

11. Verwendung des Verfahrens gemäß einem der vorhergehenden Ansprüche 1 bis 7 zur Konsistenzprüfung von durch ein Assistenzsystem (2) segmentierten Zeitreihendaten.
